# EUROPÄISCHE PATENTANMELDUNG

(11) **EP 1 755 047 A1**
(43) Veröffentlichungstag der Anmeldung: **21.02.2007**
(21) Anmeldenummer: 05017812.8
(22) Anmeldetag: 17.08.2005
(51) Int. Cl.: G06F 17/30

(54) **Langzeit-Archivierungssystem inklusive Metadaten Kurzzeit-Archiv zur Suche nach archivierten Daten**

(71) Anmelder: Deutsche Post AG, 53113 Bonn (DE)
(72) Erfinder: Rao, Roberto Dr., 61169 Friedberg (DE); Kranz, Jürgen, 50374 Erftstadt (DE)
(74) Vertreter: Jostarndt, Hans-Dieter

(57) **Zusammenfassung**

Die Erfindung betrifft Verfahren und eine Anordnung von Vorrichtungen zur Archivierung und Recherche von buchungsrelevanten Daten in einem computergestützten Filialsystem, wobei insbesondere gefilterte, ungefilterte und/oder aufbereitete Rohdaten archiviert werden, welche von einem Client (10) im Frontend erzeugt wurden. Zur Archivierung ist als eine von mehreren Servicekomponenten (40) eines Backends eine Archivkomponente (43) vorgesehen, welche Daten in einem Archiv (33) archiviert. Das Archiv (33) wird durch ein Kurzzeitarchiv (32) in Form einer Datenbank und ein Langzeitarchiv (31) in Form eines CAS-basierten Datenspeichersystems gebildet. Das Kurzzeitarchiv enthält Metadaten, während die kompletten Buchungsdaten in das Langzeitarchiv (31) exportiert werden, in welchem die Daten mittels context-basierter Kennungen gespeichert werden. Um einem Recherche-Client (11;12) die Online-Recherche auf dem Langzeitarchiv (31) zu ermöglichen, werden im Kurzzeitarchiv (32) Suchkriterien und Kennungen gespeichert, mit welchen die zugehörigen Daten bei einem entsprechenden Suchauftrag des Recherche-Clients (11;12) über das Kurzzeitarchiv aus dem Langzeitarchiv ausgelesen werden können. Durch die Erfindung ist es somit möglich, ein Festplattensystem zur Archivierung von buchungsrelevanten Daten zu nutzen, ohne auf eine Online-Recherche verzichten zu müssen.

## Beschreibung

Die Erfindung betrifft eine Anordnung von Vorrichtungen zur Archivierung und Recherche von buchungsrelevanten Daten eines computergestützten Filialsystems, bestehend aus wenigstens einem Client in einem Frontend, der über eine Kommunikationskomponente mit einem Backend in Verbindung steht. Dabei wird das Backend durch mehrere Servicekomponenten gebildet und an die Kommunikationskomponente sind ferner mehrere Umsysteme angeschlossen sind. Der Client weist Mittel zur Erzeugung von Daten und zur Übermittlung der Daten über die Kommunikationskomponente an die Servicekomponenten auf, wobei die Servicekomponenten Mittel zur Aufbereitung der Daten umfassen.

Die Erfindung betrifft ferner ein Verfahren zur Archivierung von Daten mit der Anordnung von Vorrichtungen und ein Verfahren zur Recherche von archivierten Daten.

Die Erfindung betrifft ferner ein computerlesbares Medium, das Befehle zum Ausführen der Schritte der Verfahren auf einem Computermittel umfasst.

Gegenwärtig gibt es eine ganze Reihe von Geschäftsfeldern, die ein weit verzweigtes Filial- oder Automatensystem umfassen, um Kunden einen flächendeckenden Zugang zu verschiedenen Dienstleistungen eines Unternehmens zu ermöglichen. Beispielhaft können dazu Verkehrsunternehmen genannt werden, die ihren Kunden an zahlreichen Bahnhöfen und Flughäfen ihre Serviceleistungen anbieten. Hierzu gehören beispielsweise der Verkauf von Bahn- oder Flugkarten, die Annahme von Gepäck oder das Mieten von Kraftfahrzeugen.

Ein anderes Beispiel stellen Postunternehmen dar, die in fast jedem Ort in einem Land den Kunden eine umfangreiche Auswahl von Postdienstleistungen zur Verfügung stellen, wie zum Beispiel die Annahme von Briefen und Paketen, den Verkauf von Postwertzeichen sowie eine ganze Reihe von Bankdienstleistungen. Ferner können in Filialen Dienstleistungen im Bereich der Telekommunikation angeboten werden, wie es beispielsweise durch den Abschluss eines Mobiltelefonvertrags gegeben ist. Die genannten Dienstleistungen werden dabei nicht nur in eigenen Filialen des Postunternehmens, sondern auch an Automaten, bei Servicepartnern oder über Internetauftritte angeboten und die Gesamtheit der an ein Netzwerk angeschlossenen Frontendstellen wird im Folgenden zur Vereinfachung als Filialsystem bezeichnet.

Beim Betrieb eines derartigen Filialsystems ist es erforderlich, anfallende Daten zu archivieren. Dabei sind insbesondere die Grundsätze der ordnungsmäßigen Buchführung (GoB) und der ordnungsmäßigen DV-gestützten Buchführungssysteme (GoBS) zu berücksichtigen, welche eine Langzeitarchivierung von unveränderlichen Daten erfordern. Für die Langzeitarchivierung ist also die Speicherung von diversen buchungsrelevanten Daten erforderlich, welche im Filialsystem erzeugt wurden. Dabei werden Daten nicht nur an mehreren Clients eines Frontends, sondern auch von verschiedenen Servicekomponenten im Backend oder angeschlossenen Umsystemen erzeugt. Bei den Daten handelt es sich beispielsweise um Datensätze wie Kassenbelege und Journale, Korrekturdatensätze, Belegreferenzen, Belegketten und/oder Verarbeitungsprotokolle.

Auf dem Gebiet der Archivierung von digital gespeicherten Informationen ist es bekannt, diese Art von "fixed content" auf optischen Medien oder Magnetbändern zu speichern. Um den Zugriff auf die archivierten Daten zu ermöglichen, werden üblicherweise RAID-Systeme zwischen Jukeboxen und einem Anwender eingerichtet. Als eine Verbesserung dieser Archivierungsart ist es ferner bekannt, das so genannte Konzept des Content Addressed Storage (CAS) einzusetzen, um beispielsweise auch Festplatten so abzusichern, dass die gespeicherten Informationen sicher und unveränderbar abgelegt werden können. Dabei erzeugt das System einen Hashwert der gespeicherten Dateien und nutzt diesen Wert als Adresse der Datei auf den Festplatten.

Bei der Archivierung insbesondere von buchungsrelevanten Daten eines Filialsystems ist es jedoch erstrebenswert, dass die archivierten Daten bei Bedarf leicht recherchierbar sind. Beispielsweise müssen Daten für eine Belegnachforschung im Rahmen der üblichen Betriebsaufgaben oder für Revisionen recherchierbar sein. Werden dazu herkömmliche ausgelagerte Speichersysteme verwendet, ist keine Online-Recherche beispielsweise durch einen Recherche-Client möglich. Um die Langzeitarchivierung von Daten in CAS-basierten Datenspeichersystemen für weit verzweigte computergestützte Filialsysteme nutzen zu können, besteht somit der Bedarf nach einem Verfahren und einem System, das eine effektive Archivierung und Online-Recherche verschiedener Daten des Systems ermöglicht.

Aufgabe der Erfindung ist es daher, eine Anordnung von Vorrichtungen und Verfahren zur Archivierung und Online-Recherche von Daten eines computergestützten Filialsystems bereitzustellen. Dabei soll zur Erfüllung von GoB- und GoBS-Anforderungen für die Langzeitarchivierung buchungsrelevanter Daten ein CAS-basiertes Datenspeichersystem genutzt werden können.

Erfindungsgemäß wird diese Aufgabe durch eine Anordnung von Vorrichtungen mit den Merkmalen des unabhängigen Anspruchs 1 gelöst. Vorteilhafte Weiterbildungen der Anordnung ergeben sich aus den Unteransprüchen 2-8. Die Aufgabe wird ferner durch ein Verfahren zur Archivierung von Daten nach Anspruch 9 und ein Verfahren zur Recherche von archivierten Daten nach Anspruch 14 gelöst. Vorteilhafte Ausführungsformen des Verfahrens zur Archivierung von Daten ergeben sich aus den Unteransprüchen 10-13, während sich vorteilhafte Ausführungsformen des Verfahrens zur Recherche aus den Unteransprüchen 15 und 16 ergeben. Der Gegenstand des Anspruchs 17 betrifft ein computerlesbares Medium mit Befehlen zur Ausführung der Verfahren auf einem Computermittel.

Von der Erfindung umfasst ist eine Anordnung von Vorrichtungen zur Archivierung und Recherche von buchungsrelevanten Daten eines computergestützten Filialsystems gemäß dem Oberbegriff des Anspruchs 1. Die Anordnung besteht aus wenigstens einem Client in einem Frontend, der über eine Kommunikationskomponente mit einem Backend in Verbindung steht, wobei das Backend durch mehrere Servicekomponenten gebildet wird. An die Kommunikationskomponente sind ferner mehrere Umsysteme angeschlossen, wobei der Client Mittel zur Erzeugung von Daten und zur Übermittlung der Daten über die Kommunikationskomponente an die Servicekomponenten umfasst.

Die Servicekomponenten weisen Mittel zur Aufbereitung der Daten auf.

Die erfindungsgemäße Anordnung umfasst als eine der Servicekomponenten im Backend eine Archivkomponente umfassend ein Archiv, das wenigstens aus einem Kurzzeitarchiv in Form eines Datenspeichersystems besteht. Bei dem CAS-basierten Datenspeichersystem handelt es sich beispielsweise um ein Festplattensystem. Die Archivkomponente umfasst Mittel zur Durchführung von Lese- und Schreibzugriffen auf dem Archiv. Das Kurzzeitarchiv selbst weist Mittel zur Übermittlung von Daten an das Langzeitarchiv und Mittel zur Hinterlegung von Suchkriterien und context-basierten Kennungen der übermittelten Daten im Kurzzeitarchiv auf.

Die erfindungsgemäße Anordnung umfasst wenigstens einen Recherche-Client umfassend Mittel zur Erzeugung eines Suchauftrags mit Suchkriterien und Mittel zur Übermittlung des Suchauftrags an die Archivkomponente, welche Mittel zur Durchführung des Suchauftrags im Archiv umfasst. Dazu wird der Suchauftrag von dem Recherche-Client an eine Dialogkomponente übergeben, welche diesen über die Kommunikationskomponente an die Archivkomponente übergibt. Die Übermittlung des Suchauftrags an die Dialogkomponente erfolgt vorzugsweise über einen Web-Service. In einem besonders bevorzugten Ausführungsbeispiel der Erfindung dient die Kommunikationskomponente dabei zur Steuerung und Übermittlung von Nachrichten zwischen den Servicekomponenten, den Clients und den Umsystemen und weist für die Verteilung von Nachrichten eine Routing-Komponente auf.

In einem weiteren Ausführungsbeispiel der Erfindung umfasst die Anordnung eine Rohdatenkomponente umfassend Mittel zur Filterung von an wenigstens einem Client erzeugten Datensätzen und Mittel zur Paketierung und Übermittlung der Datensätze über die Kommunikationskomponente an die Umsysteme. Sie kann ferner eine Sessionkomponente aufweisen, umfassend Mittel zur Bildung von Gruppen (Sessions) aus mehreren Datensätzen, eine Abstimmungskomponente umfassend Mittel zur Kumulation und Abstimmung von durch die Sessionkomponente gebildeten Gruppen aus Datensätzen und eine Korrekturkomponente zur Korrektur von fehlerhaften Datensätzen.

Die Archivkomponente weist daher Mittel zur Archivierung von Daten auf, welche von einem Client, der Rohdatenkomponente, der Sessionkomponente, der Abstimmungskomponente und/oder der Korrekturkomponente erzeugt und der Archivkomponente über die Kommunikationskomponente zugeleitet wurden. Sie umfasst vorzugsweise eine Schnittstelle zum Transfer von Nachrichten in und aus der Archivkomponente, wobei die Schnittstelle in Verbindung mit der Kommunikationskomponente steht.

Von der Erfindung umfasst ist ferner ein Verfahren zur Archivierung von buchungsrelevanten Daten eines computergestützten Filialsystems, bei dem von einem Client in einem Frontend Daten erzeugt werden, welche über die Kommunikationskomponente an ein Backend mit mehreren Servicekomponenten übermittelt werden. Daten der Clients und/oder der Servicekomponenten werden an die Archivkomponente übermittelt, welche die Daten einem Modul zum Schreiben der Daten in ein Archiv übergibt, wobei die Daten in ein Kurzzeitarchiv in Form einer Datenbank geschrieben werden. Dort erfolgt eine Zuordnung von Suchkriterien und einer context-basierten Kennung zu den Daten durch das Kurzzeitarchiv und eine Speicherung der Suchkriterien und der context-basierten Kennung im Kurzzeitarchiv. Die Daten werden vorzugsweise in vorgegebenen Zeitintervallen von dem Kurzzeitarchiv an ein Langzeitarchiv in Form eines CAS-basierten Datenspeichersystems archiviert. Die Daten werden von dem Kurzzeitarchiv beispielsweise in ein CAS-basiertes Festplattensystem exportiert. Dabei kann die Routing-Komponente der Kommunikationskomponente zur Durchführung des Verfahrens eine Steuerung und Übermittlung von Nachrichten zwischen der Archivkomponente, den anderen Servicekomponenten und den Clients übernehmen.

In einem besonders bevorzugten Ausführungsbeispiel der Erfindung werden neben Daten von Clients auch Daten durch die Archivkomponente archiviert, welche von einer Sessionkomponente zur Bildung von Gruppen (Sessions) aus mehreren Datensätzen, einer Abstimmungskomponente zur Kumulation und Abstimmung von durch die Sessionkomponente gebildeten Gruppen aus Datensätzen und einer Korrekturkomponente zur Korrektur von fehlerhaften Datensätzen erzeugt wurden. Rohdatensätze der Clients werden beispielsweise vor der Filterung in einer Rohdatenkomponente durch die Archivkomponente im Archiv archiviert.

Von der Erfindung umfasst ist ferner ein Verfahren zur Recherche von Daten eines computergestützten Filialsystems in einem Archiv, bei dem die Daten zuvor von einer Archivkomponente nach dem erfindungsgemäßen Verfahren zur Archivierung von Daten in einem Archiv archiviert wurden. Zur Recherche bestimmter Daten wird durch einen Recherche-Client ein Suchauftrag erzeugt und dieser der Dialogkomponente übermittelt. Die Übermittlung des Suchauftrags erfolgt vorzugsweise als Online-Aufruf über einen Web-Service. Die Dialogkomponente übermittelt den Aufruf daraufhin über die Kommunikationskomponente an die Archivkomponente. Diese steuert ein Modul zum Lesen im Archiv an, wobei mit den Suchkriterien des Suchauftrags ein Datensatz im Kurzzeitarchiv ermittelt wird. Falls zugehörige Daten bereits im Langzeitarchiv gespeichert wurden, werden die im Kurzzeitarchiv hinterlegten context-basierten Kennungen des gesuchten Datensatzes ermittelt. Falls eine Übertragung in das Langzeitarchiv erfolgt ist, wird der Datensatz anhand der context-basierten Kennung aus dem Langzeitarchiv ausgelesen und über die Kommunikationskomponente an den Recherche-Client übermittelt. Wurde der gesuchte Datensatz noch nicht in das Langzeitarchiv exportiert, wird er im Kurzzeitarchiv ausgelesen und über die Kommunikationskomponente und die Dialogkomponente an den Recherche-Client übergeben. Die Übermittlung der Suchergebnisse von der Dialogkomponente an den Recherche-Client erfolgt vorzugsweise ebenfalls über einen Web-Service.

Von der Erfindung umfasst ist ferner ein computerlesbares Medium, das Befehle zum Ausführen der Schritte der erfindungsgemäßen Verfahren auf einem Computermittel aufweist.

Ein Vorteil der Erfindung liegt in der Kapselung verschiedener Archivierungsfunktionen in einer Archivkomponente, welche über ein Routing einer Kommunikationskomponente in Verbindung mit anderen Servicekomponenten steht, welche zu archivierende Daten liefern oder Daten anfordern. Ferner wird durch die spezifische Ausgestaltung der Archivkomponente mit einem entsprechenden Kurzzeitarchiv die Anbindung eines Langzeitarchivs in Form eines CAS-basierten Datenspeichersystems ermöglicht. Insbesondere wird die Verwendung eines CAS-basierten Festplattensystems zur Archivierung buchungsrelevanter Daten ermöglicht.

Beim Aufruf von Daten nach bestimmten Suchkriterien ordnet das Kurzzeitarchiv den Suchkriterien archivierte Daten des Langzeitarchivs zu und fordert diese anhand der vergebenen Kennung aus dem Langzeitarchiv an. Durch diese Zweiteilung der Speicherung von Suchkriterien und Kennungen im Kurzzeitarchiv und den buchungsrelevanten Daten im Langzeitarchiv kann eine Recherche ermöglicht werden, welche sich dem Recherche-Client als Online-Recherche darstellt. Die buchungsrelevanten Daten können so über einen Zeitraum von über 10 Jahren gesucht werden, als ob sie auf einer schnellen Datenbank wie dem Kurzeitarchiv liegen würden.

Ein Langzeitarchiv in Form einer Datenbank hätte dagegen den Nachteil, dass das Datenvolumen eines gesamten Filialsystems nach mehreren Jahren zu groß werden würde, da beispielsweise mehrere 100 TB Daten üblicherweise nicht in einer Datenbank gespeichert werden könnten. Ferner besteht bei Datenbanken das Problem der Revisionssicherheit. Die Erfindung'ermöglicht es, wesentlich kleinere Datenvolumen der Suchkriterien und Kennungen in der Größenordnung von etwa 10 TB zu speichern und die revisionssicheren Buchungsdaten auf einem Datenspeichersystem auszulagern, welches den GoB- und GoBS-Anforderungen der Langzeitarchivierung genügt. Der Zugriff erfolgt dann durch die Verschaltung der Datenbank des Kurzzeitarchivs mit dem Langzeitarchiv so, als ob alles auf einer Datenbank liegen würde.

Liegen die Daten zum Zeitpunkt der Recherche noch im Kurzzeitarchiv, ist kein Aufruf im Langzeitarchiv erforderlich, sondern die Daten werden direkt aus dem Kurzzeitarchiv ausgelesen. Dabei ist es für die Recherche unerheblich, ob die Daten noch im Kurzzeitarchiv liegen oder bereits in das Langzeitarchiv exportiert wurden. Auch dass Metadaten in einer Datenbank des Kurzzeitarchivs liegen, während die eigentlichen Buchungsdaten auf einem anderen Speichersystem liegen, ist für die Recherche völlig transparent.

Die Möglichkeit der Online-Recherche wird dadurch unterstützt, dass der Suchauftrag eines Recherche-Clients über einen Web-Service an eine Dialogkomponente übergeben werden kann, welche den Aufruf an die Archivkomponente weiterleitet. Auch die Suchergebnisse werden vorzugsweise über die Dialogkomponente und einen Web-Service zurück an den Recherche-Client gegeben. Dadurch ist eine schnelle Übertragung von Aufrufen und Antworten beispielsweise über das Internet möglich. Ein Web Service stellt Dienstleistungen über das Internet (HTTP) zur Verfügung. Da Web-Services alle die gleichen offenen Standards zur Kommunikation nutzen, sind sie übergreifend kompatibel und miteinander verzahnbar.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Ausführungsbeispiel eines computergestützten Filialsystems, in welchem Daten aufbereitet, archiviert und recherchiert werden;
- Fig. 2: ein besonders bevorzugtes Ausführungsbeispiel einer Archivkomponente zur Archivierung und Recherche von Daten; und
- Fig. 3: den Zugriff mehrerer Recherche-Clients auf Daten eines Archivs.

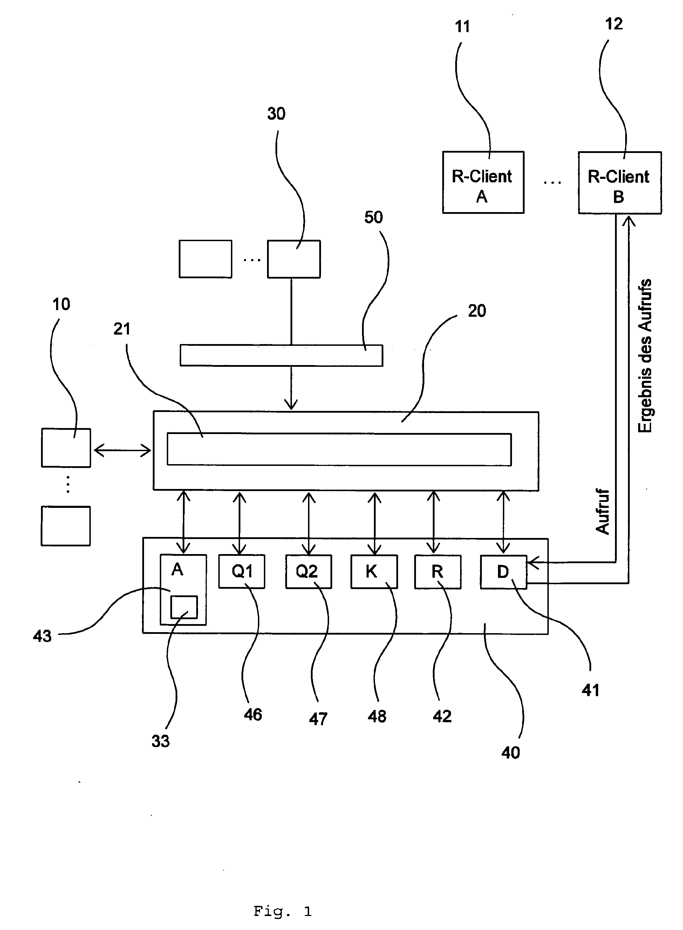

In Fig. 1 ist ein computergestütztes Filialsystem dargestellt, dessen Bestandteil die erfindungsgemäße Anordnung von Vorrichtungen zur Archivierung und Online-Recherche von Daten sein kann. Die Anordnung umfasst wenigstens eine Kommunikationskomponente 20, welche zur Übermittlung von Daten zwischen wenigstens einem Client 10 und mehreren Servicekomponenten zur Aufbereitung der Daten angeordnet ist. Die Servicekomponenten sind in ihrer Gesamtheit als Funktionsblock 40 dargestellt und können verschiedene gekapselte Einzelkomponenten mit spezifischen Funktionen umfassen.

An die Kommunikationskomponente 20 sind ferner mehrere Umsysteme 30 angeschlossen. Zwischen die Umsysteme 30 und die Kommunikationskomponente 20 ist vorzugsweise eine Sicherheitsschicht 50 geschaltet. Die Umsysteme können auch über eine direkte Verbindung zu den Servicekomponenten verfügen, es hat sich jedoch als zweckmäßig erwiesen, dass die Kommunikation der Servicekomponenten mit den Umsystemen ebenfalls über die Kommunikationskomponente erfolgt. Somit handelt es sich um eine zentrale Kommunikationskomponente, über welche vorzugsweise die gesamte Kommunikation von Einzelkomponenten des Systems abgewickelt wird.

Zu den Clients zählt neben wenigstens einem Client 10 zur Abwicklung von Geschäftsvorgängen mit Kunden des Filialsystems ferner wenigstens ein Recherche-Client, über welchen auf archivierte Daten in einem Archiv 33 zugegriffen werden kann. In dem Ausführungsbeispiel der Fig. 1 sind zwei Recherche-Clients 11 und 12 dargestellt. Die Recherche-Clients sind vorzugsweise über Web-Services an das System angeschlossen.

Bei der Anordnung gemäß Fig. 1 handelt es sich beispielsweise um ein Retail-System, das die Durchführung von Geschäftsvorgängen an den Clients 10 im Frontend ermöglicht. Bei den Geschäftsvorgängen kann es sich um Transaktionen wie Käufe, Einlieferungen, Vertragsabschlüsse oder Abfragen handeln. Die Anordnung wird vorzugsweise durch ein Computersystem gebildet, das möglichst einfach erweiterbar oder veränderbar ist. Solche Computeranordnungen für Filialsysteme werden dazu üblicherweise stark modular ausgebildet. Bei den Modulen handelt es sich um standardisierte Komponenten, welche von mehreren anderen Komponenten verwendet werden können.

Zu den Servicekomponenten 40 zählt wenigstens eine Dialogkomponente 41 insbesondere zum Empfangen von Aufrufen der Recherche-Clients über einen Web-Service. Die Dialogkomponente dient innerhalb des Systems zur Durchführung von schnellen und statuslosen Online-Aufrufen. Beispielsweise sind über sie Online-Aufrufe der Clients 10 in den Umsystemen 30 möglich, falls deren Daten bei einem Geschäftsvorgang am Frontend erforderlich sind. Ein Online-Aufruf eines Clients in einem Umsystem kann ebenfalls über einen Web-Service durchgeführt werden, diese Ausführungsform ist jedoch in Fig. 1 nicht explizit dargestellt. Die Übermittlung von an den Clients erzeugten Daten erfolgt vorzugsweise über die Kommunikationskomponente 20, so dass die Clients in Fig. 1 mit einer Verbindung zur Kommunikationskomponente dargestellt sind. Neben Aufrufen der Clients 10 dient die Dialogkomponente erfindungsgemäß dem Zugriff der Recherche-Clients auf das Archiv 33 des Systems. Zugriffe der Recherche-Clients auf die Daten der Umsysteme können über die Dialogkomponente ebenfalls ermöglicht werden.

Zu den Servicekomponenten 40 kann ferner eine Rohdatenkomponente 42 zur Filterung von Rohdaten der Clients 10 nach vorgegebenen Kriterien der Umsysteme und zur Weiterleitung der gefilterten Daten an die Umsysteme zählen. Ferner kann eine Sessionkomponente 46 zur Prüfung von Rohdaten und zur Bildung von Sessions (Journalen) aus den Daten vorgesehen sein. Vorzugsweise wird die Sessionkomponente durch eine Abstimmungskomponente 47 ergänzt, welche eine Kumulation und Abstimmung der geprüften und zu Journalen zusammengefassten Daten vornimmt. In einem besonders bevorzugten Ausführungsbeispiel der Erfindung ist ferner eine Korrekturkomponente 48 vorgesehen, welche Fehlermeldungen von der Sessionkomponente 46, der Abstimmungskomponente 47 und den Umsystemen 30 erhalten kann, falls von diesen Komponenten fehlerhafte Datensätze erkannt wurden.

Die Korrekturkomponente 48 ist verantwortlich für die Abwicklung aller fachlich notwendigen Korrekturen an buchungsrelevanten Datensätzen und Vorgängen. Das Korrekturmanagement hat zum Ziel, durch eine zeitgerechte Korrektur fehlerhafter Datensätze die Arbeit der Servicekomponenten 40 und der daran angeschlossenen Umsysteme zu unterstützen, wobei es als fehlerhaft erkannte Datensätze korrigiert und zusätzlich zu diesen Datensätzen korrigierte Datensätze in das System einstellt. Dabei erhalten die korrigierten Datensätze vorzugsweise eine Referenz auf den fehlerhaften Datensatz. In einem Archiv 33 des Systems müssen somit als fehlerhaft erkannte Datensätze und zugehörige Korrekturdatensätze archiviert werden.

Die Clients 10 sind vorzugsweise als Computeranwendungen ausgeführt, die beispielsweise in mehreren Filialen eines Unternehmens angeordnet sind. Dabei können die Clients zu einem Client-Server-System gehören und/oder eine gemeinsame Plattform verwenden, welche allen Clients gemeinsame Funktionalitäten bereitstellt. In einem besonders bevorzugten Ausführungsbeispiel der Erfindung können die Clients jedoch auch ohne ständige Anbindung an die Servicekomponenten des Backends arbeiten, wodurch sie offlinefähig sind. Die Verbindung der Clients mit anderen Komponenten kann über das Internet in Form von Web-Services oder die Kommunikationskomponente erfolgen, welche verschiedene Wege des Nachrichtentransfers verwirklichen kann.

An einem Client 10 werden beispielsweise diverse Geschäftsvorgänge durchgeführt, wobei bei den Vorgängen auf Daten der Umsysteme zugegriffen und Rohdaten für die angeschlossenen Umsysteme erzeugt werden. Werden in den Filialen eines Postunternehmens beispielsweise Telekommunikationsdienstleistungen wie Telefonanschlüsse oder Mobiltelefonverträge verschiedener Anbieter angeboten, müssen die Daten der jeweiligen Systeme der Anbieter an den Clients in der Filiale verfügbar gemacht werden. Das Gleiche gilt für Bankgeschäfte, Warenverkäufe und natürlich die üblichen postalischen Dienstleistungen wie beispielsweise die Annahme von Postsendungen oder der Verkauf von Postwertzeichen. Ferner müssen an den Clients anfallende Rohdaten an die Umsysteme übermittelt und Abfragen von Daten ermöglicht werden.

Neben den Clients 10, an denen Vorgänge bei der Abwicklung von Geschäften mit Kunden durchgeführt werden, umfasst die Anordnung vorzugsweise wenigstens einen Recherche-Client. Beispielsweise kann eine Vielzahl von Recherche-Clients an verschiedenen Standorten des Filialsystems angeordnet sein, wodurch die Recherche verschiedenen Bereichen eines Unternehmens zugänglich gemacht werden kann. Als Nutzkreise der Recherche-Clients kommen beispielsweise Wirtschaftsprüfer, fachliche Betriebe oder sonstige Nachforschungsstellen eines Unternehmens in Betracht, welches das Filialsystem betreibt.

Der Standort der Recherche-Clients kann vorzugsweise beliebig verändert werden. Es ist jedoch auch möglich, dass Online-Recherchen lediglich an einem zentralen Recherche-Client durchgeführt werden, oder dass die Recherchefunktionen auf einem Rechner im Frontend integriert sind, welcher auch zur Durchführung von Geschäftsvorgängen mit Kunden geeignet ist. Im letzten Fall würde der Client 10 beispielsweise mit einem der Recherche-Clients 11 oder 12 zusammenfallen.

Die Recherche-Clients 11 und 12 sind vorzugsweise so ausgebildet, dass sie Suchanfragen auf der Basis definierter Suchkriterien erzeugen und die Ergebnisse visualisieren können. Suchkriterien beinhalten Dateninhalte zur Identifizierung eines oder mehrerer Geschäftsvorfälle. Dateninhalte sind dabei beispielsweise Filialschlüssel, Kassenschlüssel, Identcodes, Kundennummern, etc. Auch eine Freitexteingabe z.B. von Kundennamen kann ermöglicht werden. Die Anfragen auf Recherche-Anfragen sollten zweckmäßigerweise in einer angemessenen Zeit erfolgen, wobei die Treffermengen vorzugsweise Einzelsätze umfassen. Die recherchierten Daten sind vorzugsweise exportierbar.

Die Kommunikationskomponente 20 ist vorzugsweise für die gesamte Kommunikation zwischen Komponenten des Systems zuständig. Eine zu versendende Nachricht gelangt in die interne Datenhaltung der Kommunikationskomponente, von der aus die Nachrichtenverteilung einer Routing-Komponente 21 angesteuert wird. Dabei ist es bevorzugt, dass die Nachrichten lediglich logische Adressen aufweisen, aus denen die Kommunikationskomponente die entsprechenden physischen Adressen erzeugt und die Datensätze an den jeweiligen Port schickt. Dabei werden die Umsysteme 30 ebenso als Zieladressen angesehen wie die Servicekomponenten 40. Das Routing sorgt dafür, dass die Nachrichten an die richtigen Ausgänge geschickt werden. Dabei kann es vorteilhaft sein, dass Nachrichten aktiv von der Kommunikationskomponente abgeholt werden. In diesem Fall sammeln sich die Nachrichten solange in einem Ausgang mit Queuecharakter, bis sie durch entsprechende Aktionen der Empfänger abgeholt werden. Für die Servicekomponenten kann es jedoch auch vorteilhaft sein, dass die Abholung von Nachrichten an der Kommunikationskomponente nicht aktiv durch die Komponente erfolgt, sondern dass die jeweilige Komponente passiv mit Nachrichten beliefert wird. In diesem Fall kann die Kommunikationskomponente beispielsweise einen Adapter umfassen, welcher Nachrichten direkt in die jeweilige Komponente hineinschreibt.

Kommunikationskomponenten zur Abwicklung des Nachrichtentransfers zwischen zwei Bereichen eines Computersystems sind bekannt und können auf übliche Weise realisiert werden. Nachrichten können unterschiedlich geformte Informationen tragen. Beispielsweise stellen Datensätze, Aufrufe oder Protokolle Nachrichten dar. Die gesamte Kommunikation der Kommunikationskomponente 20 basiert vorzugsweise auf SOAP (Simple Object Access Protocol) und XML (Extensible Markup Language).

XML ist eine Beschreibungssprache und stellt einen einheitlichen Standard für den einfachen, neutralen und flexiblen Datenaustausch dar. Eine SOAP-Nachricht ist nach dem Head-Body-Pattern modelliert. Im Head-Bereich der Nachricht werden die Metainformationen der Nachricht untergebracht. Diese können Informationen über das Routing der Nachricht, über eine eventuelle Verschlüsselung und/oder über die Zugehörigkeit zu einer Transaktion umfassen. Der SOAP-Body enthält die eigentlichen Informationen der Nachricht, zu denen komplette Objekte, Parameter für aufzurufende Methoden oder Rohdatensätze gehören können. Die beiden Teile der SOAP-Nachricht werden vorzugsweise in einem SOAP-Envelope zusammengefasst.

Die Nachrichtenübermittlung zwischen den einzelnen Servicekomponenten 40 erfolgt vorzugsweise ausschließlich über die Kommunikationskomponente 20, so dass jede Servicekomponente zweckmäßigerweise eine Schnittstelle zur Kommunikationskomponente aufweist. Soll eine Servicekomponente Nachrichten aktiv an der Kommunikationskomponente abholen, hat es sich als vorteilhaft erwiesen, dass sie die Nachrichten nicht direkt von dieser Schnittstelle geholt, sondern eine Nachrichten verarbeitende Komponente (Active Message Handler - AMH) diese Aufgabe übernimmt.

Der AMH bildet eine Abstraktionsschicht, welche einzelne Servicekomponenten von der Notwendigkeit befreit, spezifisches Wissen über die Kommunikationskomponente zu haben. Zum anderen übernimmt er den aktiven Part, Daten aus der Kommunikationskomponente abzuholen und in eine Servicekomponente hineinzureichen. Dabei ist es eine wichtige Eigenschaft des Active Message Handlers, dass er eine flexible und gleichzeitig standardisierte Möglichkeit bietet, den Nachrichtenverkehr zwischen der Kommunikationskomponente und den Servicekomponenten des Backends asynchron zu gestalten.

Für einige Servicekomponenten kann es erstrebenswert sein, dass sie nicht direkt an eine Schnittstelle zur Kommunikationskomponente 20 gehen, da viele Aufgaben von mehreren Servicekomponenten in immer gleicher Funktion, aber unterschiedlicher Ausprägung erledigt werden müssen. So muss das richtige Protokoll beachtet werden, die Daten müssen aktiv abgeholt werden, eine Skalierung muss geschaffen werden und in der jeweiligen Servicekomponente ist ein schneller Empfänger erforderlich. Dabei ist die Schnittstelle der Servicekomponenten zur Kommunikationskomponente vorzugsweise passiv ausgestaltet, so dass sie lediglich von anderen Modulen beauftragt wird, eine Nachricht zu holen. Der Active Message Handler ist dagegen vorzugsweise aktiv ausgestaltet und holt permanent Daten von der Kommunikationskomponente ab, wobei er keinen Anstoß benötigt.

Da die Kommunikationskomponente 20 in einem besonders bevorzugten Ausführungsbeispiel der Erfindung so ausgebildet ist, dass sie ein reines Transportmedium ist, das keine Daten aufbewahrt, erwartet die Kommunikationskomponente eine unmittelbare Bestätigung des Empfangs einer Nachricht, nachdem eine Servicekomponente eine Nachricht angefordert bzw. empfangen hat, da die Nachricht sonst zu lange in der Kommunikationskomponente gespeichert werden müsste. Dies hat zur Konsequenz, dass es nicht zweckmäßig ist, wenn die Servicekomponenten eine Nachricht abholen, diese vollständig verarbeiten und erst dann den Empfang bestätigen. Die Servicekomponenten bringen die Nachricht daher schnell an einen sicheren Ort und bestätigen anschließend sofort den Empfang.

Ein asynchroner Datenverkehr zwischen der Kommunikationskomponente und den Servicekomponenten kann somit dadurch erreicht werden, dass der AMH den Eingang von Nachrichten und deren Verarbeitung trennt. Der AMH hat lediglich die Aufgabe, Daten schnellstmöglich weiterzuleiten, die Servicekomponenten können die Nachrichten hingegen je nach Last unabhängig von der Kommunikationskomponente abarbeiten. Es findet somit eine Entkopplung statt, welche die Kommunikationskomponente unabhängig von einigen Servicekomponenten des Backends machen kann.

Daten können von Servicekomponenten ferner über einen Nachrichtenrückkanal an die Kommunikationskomponente übermittelt werden. Der Nachrichtenrückkanal ist vorzugsweise als Funktionsbibliothek ausgebildet und die Aufgabe dieser Funktionsbibliothek ist die Erleichterung des Umgangs unterschiedlicher Komponenten des Systems mit der Kommunikationskomponente 20. Entsprechend bietet er Funktionsaufrufe etwa für den korrekten Aufbau von SOAP Envelopes oder er ermöglicht die einfache Übergabe von zu verschickenden Nachrichten.

Erfindungsgemäß umfasst die Anordnung als wesentlichen Bestandteil eine Archivkomponente 43, welche in Fig. 1 auch mit A bezeichnet ist. Die Archivkomponente bietet anderen Komponenten Dienste an, um Daten in einem Archiv 33 zu archivieren oder aus dem Archiv zu lesen. Das Archiv kann in einem besonders bevorzugten Ausführungsbeispiel der Erfindung XML-basierte Daten einlagern und auslesen. Ferner sollte in dem Archiv gesucht werden können.

Das Archiv 33 wird durch ein Kurzzeitarchiv 32 in Form einer Datenbank und ein Langzeitarchiv 31 in Form eines CAS-basierten Datenspeichersystems gebildet. Bei dem CAS-basierten Datenspeichersystem handelt es sich vorzugsweise um ein Festplattensystem, in dem Daten aufgrund von context-basierten Kennungen archiviert werden. Als Festplattensystem kommt beispielsweise das Produkt Centera der EMC Corporation in Frage. Für den Nutzer des Archivs stellt sich der Zusammenschluss dieser beiden Komponenten jedoch als Einheit dar. Die Archivkomponente übernimmt die Archivierung und Verteilung von Daten im Kurzzeit- und im Langzeitarchiv, um das Langzeitarchiv als Speicherort nutzen und dennoch eine Online-Recherche ermöglichen zu können. Dazu sind im Kurzzeitarchiv Metadaten gespeichert, während die kompletten Buchungsdaten im Langzeitarchiv hinterlegt sind.

Zusätzlich zur direkten Verwendung als Speicherort kann die Archivkomponente 43 auch implizit genutzt werden, wenn das Archiv als Zwischenstation für zu archivierende Aufrufe angegeben wird. In diesem Fall wird eine Nachricht auf dem Weg zum eigentlichen Empfänger über das Archiv geleitet und automatisch von der Archivkomponente archiviert. Ein Aufruf wird über das Archiv geleitet, dort archiviert und dann vorzugsweise seriell an den eigentlichen Empfänger übermittelt. So kann ohne die Notwendigkeit von verteilten Transaktionen eine konsistente Datenhaltung zwischen Archiv und Empfänger einer Nachricht sichergestellt werden. Da auch die Zwischenstation selbst weitere Zwischenschritte für das Nachrichtenrouting angeben kann, besteht ferner die Möglichkeit, dass an zentraler Stelle im Backend die Archivierung von Nachrichten erzwungen werden kann, ohne dass eine Client-Applikation angepasst werden muss.

Die Archivkomponente 43 spielt eine zentrale Rolle im Rahmen der GoB- und GoBS-Anforderungen an das System. Das Archiv 33 enthält das Grundbuch und bewahrt somit sämtliche Daten im Rahmen der gesetzlichen Aufbewahrungsfrist auf. Das Grundbuch ist ein Erfassungsprotokoll, welches sicherstellt, dass alle Geschäftsfälle chronologisch, vollständig und nachvollziehbar erfasst werden. Zur Erfüllung der Anforderungen an ein Grundbuch sind Daten beispielsweise auf unveränderliche Datenträger zu schreiben, wobei nicht nur die eigentlichen Belegdaten archivierungspflichtig sind, sondern auch die zugehörigen Stammdaten, die Protokolle oder auch entsprechende Programmversionen. Letztlich muss alles archiviert werden, was zur Nachvollziehbarkeit eines bestimmten Geschäftsablaufs erforderlich ist. Daneben erfüllt die Archivkomponente aber auch den Zweck, als Recherchepool innerhalb definierter Zeiträume relevante Daten Online zur Verfügung zu stellen.

Die Archivkomponente 43 wird über eine Schnittstelle 60 an die Kommunikationskomponente 20 angebunden und Daten und Anfragen kommen vorzugsweise ausschließlich über diesen Kanal in die Komponente und verlassen sie auf diesem Weg auch wieder. Die Komponente kann zur aktiven Abholung von Nachrichten an der Kommunikationskomponente über einen Active Message Handler zur Abholung der Daten an der Schnittstelle 60 und einen Nachrichtenrückkanal, beispielsweise zur Rückgabe von Ergebnissen, aus Anfragen verfügen. In einem besonders bevorzugten Ausführungsbeispiel der Erfindung erfolgt der Empfang von Nachrichten in der Archivkomponente jedoch passiv und es wird kein AMH eingesetzt. Stattdessen kann die Kommunikationskomponente einen entsprechenden Adapter aufweisen, welcher Nachrichten direkt in die Archivkomponente hineinschreibt.

Von der Schnittstelle 60 gelangen Nachrichten zu einem Routing, welches anhand der angelieferten Daten entscheidet, ob sie in das Kurzzeitarchiv 32 und/oder das Langzeitarchiv 31 geleitet werden sollen. Bei den Servicestrukturen innerhalb der Archivkomponente kann es sich beispielsweise um Komponenten zum Schreiben von Daten in das Kurzzeit- oder Langzeitarchiv handeln. Das Kurzzeitarchiv wird beispielsweise durch eine Datenbank gebildet und nimmt für einen bestimmten Zeitraum alle buchungsrelevanten Daten auf. Dazu zählen Rohdatensätze, Referenznummern, korrigierte Datensätze und Korrekturprotokolle. Vom Kurzzeitarchiv werden diese Daten in bestimmten Zyklen an das Langzeitarchiv übergeben. Beispielsweise erfolgt einmal pro Tag ein Export von Daten des Kurzzeitarchivs in das Langzeitarchiv 31.

Das Kurzzeitarchiv dient ferner als Datenquelle zur Online-Recherche in dem Archiv 33. Da das Archiv durch zwei Speichermedien gebildet wird, können sich die bei einer Recherche gesuchten Daten somit im Kurzzeitarchiv oder im Langzeitarchiv befinden. Liegen sie im Kurzzeitarchiv, können sie direkt ausgelesen werden. Liegen gesuchte Daten dagegen bereits im Langzeitarchiv, sind dazu im Kurzzeitarchiv Suchkriterien und die zugehörigen Kennungen der Datensätze des Langzeitarchivs gespeichert. Für den Aufruf eines Datensatzes in dem Langzeitarchiv in Form eines Festplattensystems muss die Anwendung nicht den physischen Speicherort der Daten verfolgen. Anhand der Context-Attribute wird vielmehr eine eindeutige Kennung erzeugt, mit welcher der Datensatz aufgerufen werden kann. Die Kennung wird zweckmäßigerweise zum zugehörigen Datensatz im Kurzzeitarchiv hinterlegt. Das Kurzzeitarchiv muss für Online-Abfragen in der Lage sein, schnell auf diese Daten zugreifen zu können. Dabei werden neben rein technischen Zugriffen auch fachliche Zugriffe realisiert, falls beispielsweise mit bestimmten Suchkriterien eine Menge von Datensätzen angefordert wird.

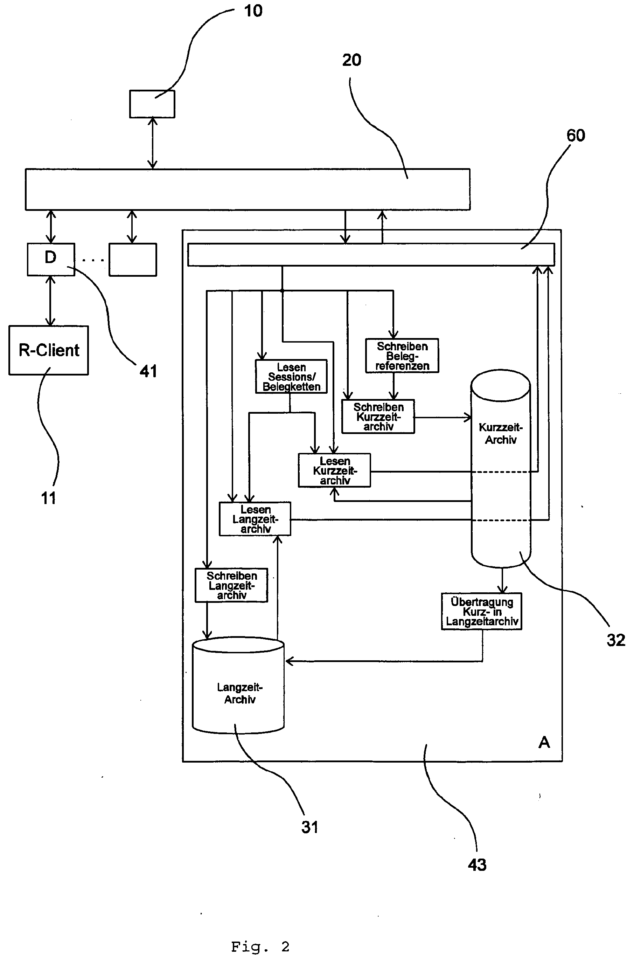

In der Archivkomponente sind somit Komponenten zum Lesen von Daten aus den beiden Archiven vorgesehen, wie sie schematisch in Fig. 2 dargestellt sind. Die Archivkomponente 43 wird von sehr vielen verschiedenen Lieferanten beliefert, so dass auch die gelieferten Datentypen entsprechend vielfältig sind. Eine der wichtigen Aufgaben der Archivkomponente kommt daher dem Routing zu, das die jeweiligen Daten an die richtige Stelle bringt.

Einen wichtigen Datentyp stellen die Rohdaten der Clients 10 dar. Bei diesen handelt es sich um Buchungen verursachender Belege, die aufbewahrungspflichtig sind. Rohdatensätze sind vorzugsweise feingranulare XML-Datensätze, die Geschäftsvorfälle auf unterster Ebene beschreiben. In einem besonders bevorzugten Ausführungsbeispiel der Erfindung werden jegliche Rohdaten von der Archivkomponente archiviert. Nach der Archivierung können die Daten einer anderen der Servicekomponenten 40, wie beispielsweise der Rohdatenkomponente, übergeben werden. Die Rohdatenkomponente führt eine Filterung der Daten durch und übergibt die gefilterten Daten gegebenenfalls erneut der Archivkomponente zur Archivierung. So können sowohl die direkt von einem Client erzeugten Rohdatensätze als auch die gefilterten Pakete für die Umsysteme archiviert werden.

Die Rohdatensätze gehen an das Routing der Archivkomponente, welches den Typ "Rohdatensatz" erkennt. Das Routing sendet die Rohdaten an ein Mittel zum direkten Schreiben der Daten in das Kurzzeitarchiv 32. Vom Kurzzeitarchiv werden die Daten in definierbaren Zeitintervallen in das Langzeitarchiv 31 exportiert. Die Anforderungen der GoB und GoBS sind über eine Zeitdauer von wenigen Tagen ebenfalls im Kurzzeitarchiv erfüllt, so dass das Archiv bestehend aus Kurzzeitarchiv und Langzeitarchiv zu jeder Zeit im Sinne der GoB und GoBS ist.

Neben Rohdaten werden auch Protokolle im Archiv archiviert. Zu den Protokollen zählen beispielsweise Protokolle der Verarbeitung wie Fehlerlogs oder auch fachliche Verarbeitungsnachweise. In den Verarbeitungsnachweisen wird der Weg von Daten durch die unterschiedlichen Servicekomponenten im Backend aufgezeichnet, wodurch eine spätere Rekonstruktion gegeben ist. Protokolle und Verarbeitungsnachweise werden ebenfalls über die Schnittstelle zur Kommunikationskomponente 20 in die Archivkomponente 43 eingeliefert und von dem Routing direkt an eine Komponente zum Schreiben der Daten in das Langzeitarchiv gegeben.

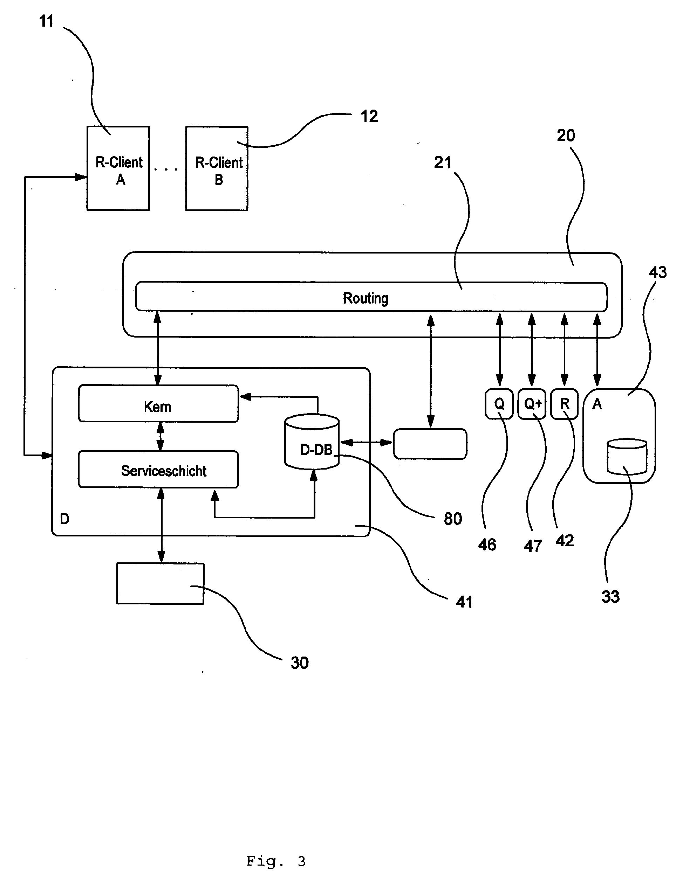

Die Online-Abfrage eines Recherche-Clients 11 oder 12 im Archiv ist schematisch in Fig. 2 und Fig. 3 dargestellt. Bei dem jeweiligen Recherche-Client handelt es sich beispielsweise um einen SOAP-Client, der einen Suchauftrag in Form einer Anfrage erzeugt und diesen vorzugsweise über einen Web-Service an die Dialogkomponente 41 übermittelt. Diese verarbeitet den Aufruf und übermittelt ihn über die Kommunikationskomponente 20 an die Archivkomponente 43. Der Aufruf wird an das Routing der Archivkomponente übergeben und das Routing leitet den Aufruf an eine Komponente zum Lesen von Daten aus dem Archiv weiter, welche den eigentlichen Aufruf durchführt. Die recherchierte Treffermenge wird über die Schnittstelle der Archivkomponente und über die Kommunikationskomponente zurück an die Dialogkomponente 41 gegeben. Die Dialogkomponente gibt das Suchergebnis über den Web-Service an den Recherche-Client. Dabei hat es sich als vorteilhaft erwiesen, dass der Recherche-Client ein Token bekommt, das auf eine Ergebnisdatei zeigt. Der Recherche-Client kann sich dann zu einem von ihm gewünschten Zeitpunkt und mit einem geeigneten Protokoll die Ergebnisdatei herunterladen. Dateien können über http oder ein Dateitransfer-Protokoll herunter geladen werden, wenn es sich beispielsweise um sehr große Datenmengen handelt.

Es handelt sich um ein asynchrones Verfahren, bei dem Verarbeitungsprozesse voneinander entkoppelt werden. Der Aufruf im Archiv wird daher von einer Komponente zeitversetzt und unabhängig vom Absender des Aufrufs am Recherche-Client durchgeführt. Der Absender sendet einen schnellen Online-Aufruf über den Web-Service auf der Dialogkomponente, er wartet in seiner eigenen Verarbeitung jedoch nicht auf das Ergebnis des asynchronen Prozesses, sondern arbeitet nach Versand des Auftrags weiter. Der Suchauftrag wird von der Archivkomponente verarbeitet und das Ergebnis wiederum über den schnellen Weg der Dialogkomponente vorzugsweise in Verbindung mit einem Web-Service an den Recherche-Client übermittelt.

Bezugszeichenliste:
- 10: Client, Frontend
- 11,12: Recherche-Client
- 20: Kommunikationskomponente
- 21: Routing-Komponente der Kommunikationskomponente
- 30: Umsystem
- 31: Langzeitarchiv, CAS-basiertes Datenspeichersystem, Festplattensystem
- 32: Kurzzeitarchiv, Datenbank
- 33: Archiv der Archivkomponente
- 40: Servicekomponenten
- 41: Dialogkomponente
- 42,R: Rohdatenkomponente
- 43,A: Archivkomponente
- 46,Q1: Sessionkomponente
- 47,Q2: Abstimmungskomponente
- 48,K: Korrekturkomponente
- 50: Sicherheitsschicht
- 60: Schnittstelle der Archivkomponente

## Patentansprüche

1. Anordnung von Vorrichtungen zur Archivierung und Recherche von buchungsrelevanten Daten eines computergestützten Filialsystems, bestehend aus wenigstens einem Client (10) in einem Frontend, der über eine Kommunikationskomponente (20) mit einem Backend in Verbindung steht, wobei das Backend durch mehrere Servicekomponenten (40) gebildet wird, und an die Kommunikationskomponente (20) mehrere Umsysteme (30) angeschlossen sind, wobei der Client (10) Mittel zur Erzeugung von Daten und zur Übermittlung der Daten über die Kommunikationskomponente (20) an die Servicekomponenten (40) umfasst und die Servicekomponenten (40) Mittel zur Aufbereitung der Daten aufweisen,
**gekennzeichnet**
**durch** wenigstens folgende Merkmale:
- Archivkomponente (43) umfassend ein Archiv (33), das wenigstens aus einem Kurzzeitarchiv (32) in Form einer Datenbank und einem Langzeitarchiv (31) in Form eines CAS-basierten Datenspeichersystems besteht, wobei die Archivkomponente (43) an die Kommunikationskomponente (20) angeschlossen ist und Mittel zur Durchführung von Lese- und Schreibzugriffen auf das Archiv (33) umfasst, und das Kurzzeitarchiv (32) Mittel zur Übermittlung von Daten an das Langzeitarchiv (31) und Mittel zur Hinterlegung von Suchkriterien und context-basierten Kennungen der übermittelten Daten im Kurzzeitarchiv (32) aufweist;
- Dialogkomponente (41) umfassend Mittel zum Empfangen von Online-Aufrufen, wobei die Dialogkomponente (41) an die Kommunikationskomponente angeschlossen ist und Mittel zur Übermittlung des Aufrufs über die Kommunikatiohskomponente (20) an andere Servicekomponenten (40) umfasst, wobei die Dialogkomponente (41) ferner Mittel zum Empfangen von Ergebnissen eines Aufrufs von anderen Servicekomponenten und zur Übermittlung der Ergebnisse an andere Mittel umfasst; und
- Recherche-Client (11;12) umfassend Mittel zur Erzeugung eines Suchauftrags mit Suchkriterien und Mittel zur Übermittlung des Suchauftrags an die Dialogkomponente (41), wobei die Dialogkomponente Mittel zum Austausch des Suchauftrags und der Suchergebnisse mit der Archivkomponente (43) und die Archivkomponente (43) Mittel zur Durchführung des Suchauftrags im Archiv (33) und zur Übermittlung der Suchergebnisse an die Dialogkomponente (41) umfasst.

2. Anordnung nach Anspruch 1,
**dadurch gekennzeichnet,**
**dass** das CAS-basierte Datenspeichersystem des Langzeitarchivs (31) ein Festplattensystem ist.

3. Anordnung nach einem oder beiden der Ansprüche 1 und 2,
**dadurch gekennzeichnet,**
**dass** die Kommunikationskomponente (20) eine Routing-Komponente (21) zur Steuerung und Übermittlung von Nachrichten zwischen den Servicekomponenten (40), den Clients (10) und den Umsystemen (30) umfasst.

4. Anordnung nach einem oder mehreren der Ansprüche 1 bis 3,
**dadurch gekennzeichnet,**
**dass** die Dialogkomponente (41) Mittel zum Empfangen von Suchaufträgen des Recherche-Clients (11;12) in Form von Online-Aufrufen über einen Web-Service und Mittel zur Übermittlung von Ergebnissen des Aufrufes über den Web-Service an den Recherche-Client (11;12) umfasst.

5. Anordnung nach einem oder mehreren der Ansprüche 1 bis 4,
**dadurch gekennzeichnet,**
**dass** die Anordnung eine Rohdatenkomponente (42) umfassend Mittel zur Filterung von an wenigstens einem Client (10) erzeugten (10) Datensätzen und Mittel zur Paketierung und Übermittlung der Datensätze über die Kommunikationskomponente (20) an die Umsysteme (30) umfasst.

6. Anordnung nach einem oder mehreren der Ansprüche 1 bis 5,
**dadurch gekennzeichnet,**
**dass** die Anordnung eine Sessionkomponente (46) umfassend Mittel zur Bildung von Gruppen (Sessions) aus mehreren Datensätzen, eine Abstimmungskomponente (47) umfassend Mittel zur Kumulation und Abstimmung von durch die Sessionkomponente (46) gebildeten Gruppen aus Datensätzen und eine Korrekturkomponente (48) zur Korrektur von fehlerhaften Datensätzen umfasst.

7. Anordnung nach einem oder beiden der Ansprüche 5 und 6,
**dadurch gekennzeichnet,**
**dass** die Archivkomponente (43) Mittel zur Archivierung von Daten aufweist, welche von einem Client (10), einer Rohdatenkomponente (42), einer Sessionkomponente (46), einer Abstimmungskomponente (47) und/oder einer Korrekturkomponente (48) erzeugt und der Archivkomponente (43) zugeleitet wurden.

8. Anordnung nach einem oder mehreren der Ansprüche 1 bis 7,
**dadurch gekennzeichnet,**
**dass** die Archivkomponente (43) eine Schnittstelle (60) zum Transfer von Nachrichten in und aus der Archivkomponente umfasst, wobei die Schnittstelle in Verbindung mit der Kommunikationskomponente (20) steht.

9. Verfahren zur Archivierung von buchungsrelevanten Daten eines computergestützten Filialsystems, bei dem von einem Client (10) in einem Frontend Daten erzeugt werden, welche über eine Kommunikationskomponente (20) an ein Backend mit mehreren Servicekomponenten (40) übermittelt werden, wobei an die Kommunikationskomponente (20) ferner mehrere Umsysteme (30) angeschlossen sind und die Servicekomponenten (40) die Daten aufbereiten und über die Kommunikationskomponente (20) an die Umsysteme (30) weiterleiten,
**gekennzeichnet**
**durch** wenigstens folgende Schritte:
- Übermittlung von Daten an eine Archivkomponente (43), welche die Daten einem Modul zum Schreiben der Daten in ein Archiv (33) übergibt, wobei die Daten in ein Kurzzeitarchiv (32) in Form einer Datenbank geschrieben werden;
- Zuordnung von Suchkriterien und einer context-basierten Kennung zu den Daten durch das Kurzzeitarchiv (32) und Speicherung der Suchkriterien und der context-basierten Kennung im Kurzzeitarchiv (32); und
- Übergabe der Daten von dem Kurzzeitarchiv (32) an ein Langzeitarchiv (31) in Form eines CAS-basierten Datenspeichersystems und Archivierung der Daten im Langzeitarchiv (31).

10. Verfahren nach Anspruch 9,
**dadurch gekennzeichnet,**
**dass** Daten vom Kurzzeitarchiv (32) an das Langzeitarchiv (31) in Form eines CAS-basierten Festplattensystems übergeben und in diesem archiviert werden.

11. Verfahren nach einem oder beiden der Ansprüche 9 und 10,
**dadurch gekennzeichnet,**
**dass** eine Routing-Komponente (21) der Kommunikationskomponente (20) zur Durchführung des Verfahrens eine Steuerung und Übermittlung von Nachrichten zwischen der Archivkomponente (43) und den Clients (10) übernimmt.

12. Verfahren nach einem oder mehreren der Ansprüche 9 bis 11,
**dadurch gekennzeichnet,**
**dass** neben Daten von Clients (10) auch Daten durch die Archivkomponente (43) archiviert werden, welche von einer Sessionkomponente (46) zur Bildung von Gruppen (Sessions) aus mehreren Datensätzen, einer Abstimmungskomponente (47) zur Kumulation und Abstimmung von durch die Sessionkomponente (46) gebildeten Gruppen aus Datensätzen und einer Korrekturkomponente (48) zur Korrektur von fehlerhaften Datensätzen erzeugt wurden.

13. Verfahren nach einem oder mehreren der Ansprüche 9 bis 12,
**dadurch gekennzeichnet,**
**dass** Rohdatensätze der Clients (10) vor der Filterung in einer Rohdatenkomponente (42) durch die Archivkomponente (43) im Archiv (33) archiviert werden.

14. Verfahren zur Recherche von buchungsrelevanten Daten eines computergestützten Filialsystems in einem Archiv, bei dem die Daten zuvor von einer Archivkomponente (43) nach einem Verfahren gemäß einem oder mehreren der Ansprüche 9 bis 13 in einem Archiv (33) archiviert wurden, das aus wenigstens einem Kurzzeitarchiv (32) in Form einer Datenbank und einem Langzeitarchiv (31) in Form eines CAS-basierten Datenspeichersystems besteht,
**gekennzeichnet**
**durch** wenigstens folgende Schritte:
- Erzeugung eines Suchauftrags mit Suchkriterien nach wenigstens einem Datensatz im Archiv (33) durch einen Recherche-Client (11;12), der den Suchauftrag an eine Dialogkomponente (41) übergibt, welche den Suchauftrag über die Kommunikationskomponente (20) an die Archivkomponente (43) übermittelt;
- Ansteuerung eines Moduls zum Lesen im Archiv (33),
wobei mit den Suchkriterien des Suchauftrags ein Datensatz im Kurzzeitarchiv (32) ermittelt wird und Ermittlung der im Kurzzeitarchiv (32) hinterlegten context-basierten Kennung eines gesuchten Datensatzes, falls zugehörige Daten im Langzeitarchiv (31) gespeichert wurden; und
- Auslesen eines ermittelten Datensatzes aus dem Kurzzeitarchiv (32) oder dem Langzeitarchiv (31) anhand der context-basierten Kennung, Übermittlung des Datensatzes über die Kommunikationskomponente (20) an die Dialogkomponente (41) und Übermittlung des Suchergebnisses an den Recherche-Client (11;12).

15. Verfahren nach Anspruch 14,
**dadurch gekennzeichnet,**
**dass** eine Routing-Komponente (21) der Kommunikationskomponente (20) zur Durchführung des Verfahrens eine Steuerung und Übermittlung von Nachrichten zwischen der Archivkomponente (40), der Dialogkomponente (41) und den Recherche-Clients (11;12) übernimmt.

16. Verfahren nach einem oder beiden der Ansprüche 14 und 15,
**dadurch gekennzeichnet,**
**dass** ein Recherche-Client (11;12) einen Suchauftrag über einen Web-Service an die Dialogkomponente (41) übermittelt und die Dialogkomponente (41) Suchergebnisse über einen Web-Service an den Recherche-Client (11;12) übermittelt.

17. Verfahren nach Anspruch 16,
**dadurch gekennzeichnet,**
**dass** ein Recherche-Client (11;12) einen Suchauftrag über einen Web-Service an die Dialogkomponente (41) übermittelt und die Dialogkomponente (41) Suchergebnisse über einen Web-Service an den Recherche-Client (11;12) übermittelt.

18. Computerlesbares Medium, das Befehle zum Ausführen der Schritte der Verfahren nach einem oder mehreren der Ansprüche 9 bis 16 auf einem Computermittel umfasst.
